# FASCICULE DE BREVET EUROPEEN

(11) **EP 1 766 809 B1**
(45) Date de publication et mention de la délivrance du brevet: **31.10.2018**
(21) Numéro de dépôt: 05762826.5
(22) Date de dépôt: 18.05.2005
(51) Int. Cl.: H04B 7/185

(54) **RESEAU DE COMMUNICATION A RELAYAGE DE SIGNAUX RADIO PAR DES TERMINAUX RELAIS**
KOMMUNIKATIONSNETZ MIT FUNKSIGNALWEITERLEITUNG DURCH TERMINAL-RELAYSTATIONEN
COMMUNICATION NETWORK WITH RADIO SIGNAL RELAYING THROUGH TERMINAL RELAYS

(30) Priorité: 08.07.2004 FR 0451471
(43) Date de publication de la demande: 28.03.2007
(73) Titulaire: Beijing Xiaomi Mobile Software Co., Ltd., Beijing 100085 (CN)
(72) Inventeur: COURSEILLE, Olivier, F-31320 AUZEVILLE (FR)
(74) Mandataire: Kudlek, Franz Thomas
(86) Numéro de dépôt international: PCT/FR2005/050340
(87) Numéro de publication internationale: WO 2006/013294

(56) Documents cités:
- WO-A-01/58042
- WO-A-02/080405
- GB-A- 2 326 059
- GB-A- 2 346 511
- US-B1- 6 473 617

## Description

L'invention concerne le domaine des réseaux de communication radio, et plus précisément la transmission de données entre des terminaux de communication radio, généralement mobiles, et une station de communication d'un tel réseau.

Dans un réseau de communication radio les communications montantes et descendantes entre les terminaux de communication et les stations de communication (comme par exemple une station de base (BTS ou Node B) d'un réseau GSM ou UMTS, ou une station satellitaire (ou « gateway »)) ne sont de bonne qualité, que lorsque les conditions de propagation sont favorables. Or, cette situation est peu fréquente lorsque les terminaux de communication mobiles sont placés dans des zones comportant des obstacles, comme par exemple dans des environnements urbains.

Dans le cas d'un réseau satellitaire, la situation est plus critique du fait que les communications entre les terminaux satellitaires et le satellite qui les couvre s'effectuent au moyen de liaisons directes. Les communications ne peuvent alors être de bonne qualité qu'à condition que le satellite soit de préférence directement en visibilité du terminal satellitaire concerné. Cet inconvénient n'est hélas pas compensé par le fait que la puissance de transmission d'un terminal satellitaire est supérieure à celle d'un terminal mobile terrestre et qu'il dispose d'une antenne de plus grande dimension. Il est même accru du fait que les satellites présentent des puissances de transmission limitées à quelques kilowatts, du fait de leur limitation en taille et en poids.

L'invention a donc pour but d'améliorer la situation dans les réseaux de communication radio, notamment lorsqu'ils sont de type satellitaire.

Voir le document GB-A-2 346 511.

L'invention est définie par les revendications annexées.

Elle propose à cet effet un procédé de transmission de données consistant, chaque fois qu'un terminal de communication radio, dit source, veut transmettre des données à la station de communication dont il dépend, à déterminer au niveau de ce terminal source l'identifiant d'au moins un terminal de communication radio voisin actif, dit relais, afin de transmettre par voie d'ondes à chaque terminal relais déterminé des signaux représentant ces données à transmettre de sorte qu'il les relaie vers la station de communication.

Le procédé selon l'invention peut comporter des caractéristiques complémentaires qui peuvent être prises séparément ou en combinaison, et notamment :
- on peut déterminer au niveau du terminal source les identifiants d'au moins deux terminaux relais afin de transmettre par voie d'ondes à chacun d'entre eux les signaux représentant les données à transmettre, de sorte que chacun relaie ces signaux vers la station de communication,
- le terminal source peut également transmettre à destination de la station de communication les signaux représentant les données,
- on peut déterminer au niveau de l'un au moins des terminaux relais l'identifiant d'au moins un terminal relais voisin actif afin de transmettre par voie d'ondes à chaque terminal relais déterminé les signaux représentant les données, de sorte qu'il les relaie également vers la station de communication,
- on peut combiner au niveau de la station les signaux reçus représentant les données identiques, avant de les traiter localement, de façon à accroître l'énergie totale reçue associée aux données transmises, et par là même la qualité de la réception,
- lorsque le réseau est de type satellitaire, on peut combiner dans le satellite de communication du réseau (chargé de relayer les données entre les terminaux et la station de communication) les signaux reçus des terminaux relais associés à un même terminal source, et représentant les données identiques, afin de relayer vers la station de communication des signaux combinés représentant les données (et dont l'énergie est accrue),
- lorsque le terminal relais reçoit des signaux à relayer, il peut se configurer en mode relais avant de procéder au relais des signaux,
- les terminaux sources peuvent être des terminaux mobiles, et ils peuvent éventuellement agir en tant que terminaux relais,
- l'un au moins des terminaux relais peut être un terminal de communication fixe (en permanence en vue du satellite lorsqu'il est de type satellitaire) dédié au relais de signaux représentant des données à transmettre.

L'invention propose également un procédé de transmission de données consistant, chaque fois que des données doivent être transmises à un terminal de communication radio, dit destinataire, à déterminer au niveau de ce terminal destinataire l'identifiant d'au moins un terminal relais voisin, de manière à transmettre par voie d'ondes à chaque terminal relais déterminé les signaux représentant les données pour qu'il les relaie vers le terminal destinataire.

Ce procédé selon l'invention peut comporter des caractéristiques complémentaires qui peuvent être prises séparément ou en combinaison, et notamment :
- le terminal destinataire peut également recevoir directement de la station de communication le signal représentant les données, et éventuellement le combiner avec ceux reçus des terminaux relais, s'il est agencé à cet effet,
- lorsque des données doivent être transmises à un terminal de communication, dit destinataire, via un satellite, on peut déterminer au niveau de ce dernier l'identifiant d'au moins un terminal relais voisin du terminal destinataire afin de transmettre par voie d'ondes à chaque terminal relais déterminé des signaux représentant les données à transmettre, de sorte qu'il les relaie vers le terminal destinataire,
- le terminal destinataire peut également recevoir directement du satellite le signal représentant les données,
- on peut déterminer au niveau de l'un au moins des terminaux relais l'identifiant d'au moins un terminal relais voisin actif afin de transmettre par voie d'ondes à chaque terminal relais déterminé les signaux représentant les données, de sorte qu'il les relaie également vers le terminal destinataire,
- on peut combiner dans le terminal destinataire les signaux reçus représentant les données avant de les traiter localement, de façon à accroître l'énergie totale reçue associée aux données transmises, et par là même la qualité de la réception,
- on peut combiner dans chaque terminal relais les signaux reçus représentant les données afin de relayer vers le terminal destinataire, éventuellement via au moins un autre terminal relais voisin, des signaux issus de cette combinaison, représentant les données (et dont l'énergie est accrue),
- lorsque le terminal relais reçoit des signaux à relayer, il peut se configurer en mode relais avant de procéder au relais des signaux,
- les terminaux destinataires peuvent être des terminaux mobiles, et ils peuvent éventuellement agir en tant que terminaux relais,
- l'un au moins des terminaux relais peut être un terminal de communication fixe (en permanence en vue du satellite lorsqu'il est de type satellitaire) dédié au relais de signaux représentant des données à transmettre.

L'invention propose également un terminal de communication (éventuellement de type satellitaire) comprenant des moyens de gestion chargés, lorsque des données doivent être transmises à la station de communication (éventuellement via un satellite), de déterminer l'identifiant d'au moins un terminal relais et d'ordonner la transmission par voie d'ondes à chaque terminal relais déterminé de signaux représentant les données, de sorte qu'ils soient relayés vers la station de communication.

Le terminal selon l'invention peut comporter des caractéristiques complémentaires qui peuvent être prises séparément ou en combinaison, et notamment :
- ses moyens de gestion peuvent être chargés d'ordonner la transmission par voie d'ondes, vers la station de communication, des signaux représentant les données,
- des moyens de traitement chargés de combiner les signaux reçus des relais représentant des données provenant de la station de communication avant que ces données ne soient traitées localement,
- des moyens de configuration chargés, en cas de réception de signaux à relayer, de configurer en mode relais des moyens de transmission locaux de sorte qu'ils relaient les signaux reçus vers au moins un terminal relais voisin ou vers un terminal destinataire. Dans ce cas, les moyens de traitement peuvent être chargés, lorsque les moyens de transmission sont configurés en mode relais, de combiner les signaux reçus représentant des données à relayer avant d'autoriser leur relais avec une énergie accrue. Ici, le terminal peut donc agir en tant que relais.

L'invention propose également un satellite de communication comprenant des moyens de traitement chargés de combiner les signaux reçus, représentant des données identiques à relayer vers la station de communication dont il dépend (laquelle est alors de type satellitaire) avant d'autoriser leur relais avec une énergie accrue.

Ce satellite peut également comprendre des moyens de gestion chargés, lorsque des données doivent être transmises à un terminal destinataire, de déterminer l'identifiant d'au moins un terminal relais voisin de ce terminal destinataire, puis d'ordonner à des moyens de transmission locaux la transmission par voie d'ondes à chaque terminal relais déterminé de signaux représentant les données pour qu'il les relaie vers le terminal destinataire et/ou vers au moins un autre terminal relais.

L'invention propose en outre une station de communication (éventuellement de type satellitaire) comprenant des moyens de traitement chargés de combiner les signaux reçus représentant des données identiques provenant d'au moins un terminal de communication radio relais, ainsi qu'éventuellement d'un terminal source, avant que ces données ne soient traitées localement.

D'autres caractéristiques et avantages de l'invention apparaîtront à l'examen de la description détaillée ci-après, et des dessins annexés, sur lesquels :
- la figure 1 illustre de façon schématique une partie d'un réseau de communication satellitaire,
- la figure 2 illustre de façon schématique et fonctionnelle un exemple de réalisation d'un terminal de communication satellitaire, mobile et apte au relais, selon l'invention,
- la figure 3 illustre de façon schématique et fonctionnelle un exemple de réalisation d'un terminal de communication satellitaire, fixe et dédié au relais, selon l'invention,
- la figure 4 illustre de façon schématique et fonctionnelle un exemple de réalisation d'un satellite de communication selon l'invention, et
- la figure 5 illustre de façon schématique et fonctionnelle un exemple de réalisation d'une station satellitaire selon l'invention.

Les dessins annexés pourront non seulement servir à compléter l'invention, mais aussi contribuer à sa définition, le cas échéant.

L'invention a pour objet d'améliorer la qualité des communications dans les réseaux de communication radio, et notamment dans les réseaux de type satellitaire.

Dans ce qui suit, on considère à titre d'exemple non limitatif que le réseau est de type satellitaire. Mais, l'invention n'est pas limitée à ce type de réseau. Elle concerne également les réseaux radio cellulaires, comme par exemple ceux de type GSM/GPRS, UMTS ou Ad-hoc.

On entend ici par « réseau satellitaire » non seulement un réseau exclusivement satellitaire, c'est-à-dire dans lequel les communications montantes et descendantes entre les terminaux de communication satellitaire et le coeur du réseau ne se font que par l'intermédiaire d'un ou plusieurs satellites, mais également un réseau hybride, c'est-à-dire dans lequel les communications montantes ou descendantes entre le coeur du réseau et les terminaux de communication satellitaire se font par l'intermédiaire d'un ou plusieurs satellites et d'un ou plusieurs répéteurs terrestres (certains constituant éventuellement des stations de base d'un réseau radio cellulaire, par exemple de type GSM/GPRS ou UMTS). Par exemple, les réseaux exclusivement satellitaires sont de type Inmarsat, Globalstar ou Thuraya, et le réseau hybride est de type SDMB (pour « Satellite Digital Multimedia Broadcast »).

Dans ce qui suit on considère à titre d'exemple non limitatif que le réseau est exclusivement satellitaire.

Par ailleurs, on entend ici par « terminal de communication satellitaire » tout équipement d'utilisateur, tel qu'un téléphone mobile ou fixe, ou un ordinateur fixe ou portable ou un assistant personnel numérique (ou APN) équipé de moyens de communication satellitaires. On considère dans ce qui suit, à titre illustratif et non limitatif, et sauf exception mentionnée explicitement, que les terminaux de communication satellitaires sont des téléphones mobiles.

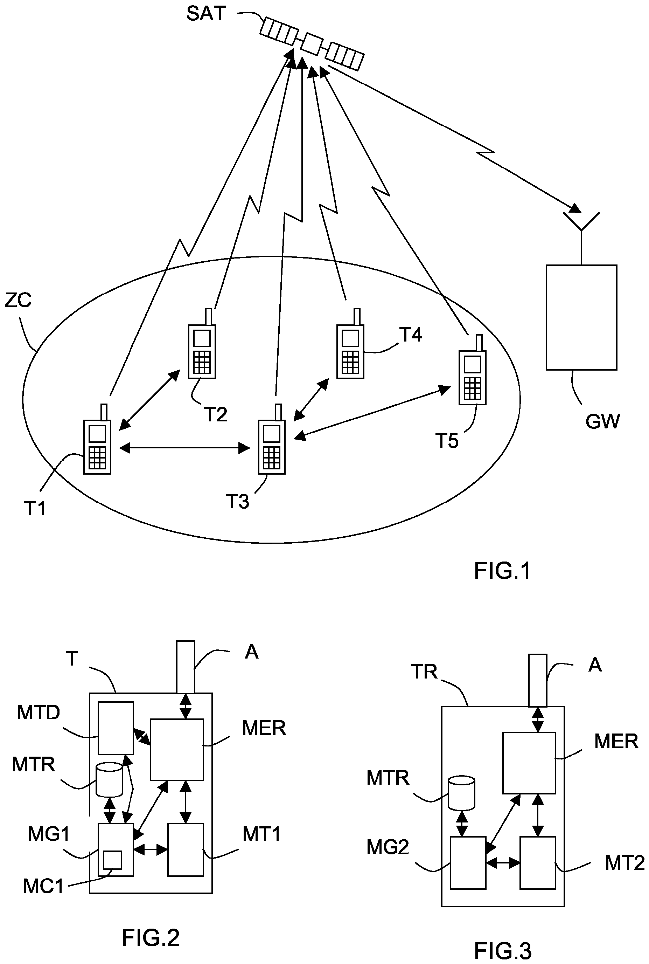

On se réfère tout d'abord à la figure 1 pour décrire un réseau satellitaire, de façon schématique mais néanmoins suffisante à la compréhension de l'invention.

Un réseau satellitaire comporte au moins une station de transmission satellitaire (ou « gateway ») GW implantée au sol en un endroit choisi et raccordée au coeur du réseau (non représenté), et au moins un satellite de communication SAT chargé de relayer les signaux qu'il reçoit de la gateway GW vers les téléphones mobiles Ti (ici i = 1 à 5, mais il peut prendre n'importe quelle valeur) qui se trouvent placés dans sa zone de couverture ZC, ainsi que les signaux qu'il reçoit des téléphones mobiles Ti vers la gateway GW.

Par exemple, lorsque le réseau utilise une interface radio de type W-CDMA, la gateway GW est chargée d'encoder les données devant être transmises à un téléphone mobile T avec un code de canalisation (ou code pseudo-aléatoire) associé au canal de transmission physique descendant et appartenant à une séquence de codes de canalisation, orthogonaux entre-eux, puis de moduler une porteuse de fréquence F0 avec les données encodées, d'étaler spectralement cette porteuse modulée avec un code d'étalement associé à la séquence, et enfin de transmettre la porteuse étalée, par voie d'ondes, au satellite SAT auquel elle est couplée, sous la forme de signaux dits « signaux à fréquence porteuse ». A réception de ces signaux, le satellite SAT transpose la fréquence F0 de la porteuse en une fréquence F1 et retransmet par voie d'ondes des signaux transposés en fréquence vers le (ou les) téléphone(s) mobile(s) Ti destinataire(s) des données.

Afin d'améliorer la qualité des communications dans le réseau satellitaire, en particulier en présence d'obstacles dans une zone de couverture ZC, l'invention propose de se servir, notamment, des téléphones mobiles Ti pour relayer les signaux radio provenant d'un téléphone mobile source ou de la gateway GW. En d'autres termes, l'invention propose, dans l'exemple décrit, de combiner des communications de types satellitaire et ad hoc.

Plus précisément, l'invention propose un procédé de transmission de données consistant à déterminer au niveau d'un téléphone mobile, dit source, par exemple T1, souhaitant transmettre des données à la gateway GW, l'identifiant d'au moins un terminal satellitaire voisin actif, dit terminal relais, par exemple T2 et T3, afin de transmettre à chacun d'entre eux, par voie d'ondes (radio), des signaux représentant ces données à transmettre, de sorte qu'il(s) les relaie(nt) vers le satellite SAT.

On entend ici par « terminal satellitaire actif » un terminal de communication satellitaire fixe ou mobile, prêt à transmettre des données du fait qu'il est en veille ou allumé, contrairement à un terminal inactif qui est éteint.

Selon l'invention, un tel terminal satellitaire actif peut être par exemple un téléphone mobile ou un terminal de communication satellitaire fixe TR, dédié exclusivement au relais de signaux provenant soit d'un téléphone mobile source Ti et destinés à la gateway GW, éventuellement via au moins un autre terminal satellitaire actif, et via le satellite SAT, soit de la gateway GW, via le satellite SAT, et destinés à un téléphone mobile Ti destinataire, éventuellement via au moins un autre terminal satellitaire actif.

La détermination du ou des identifiants des terminaux relais peut se faire au moyen d'une table de terminaux relais stockée dans chaque téléphone mobile Ti. En raison de la mobilité des téléphones mobiles Ti, leurs tables sont préférentiellement mises à jour régulièrement, par exemple périodiquement. Pour ce faire, les téléphones mobiles Ti et les éventuels terminaux relais fixes peuvent par exemple s'échanger des messages de signalisation signalant leur présence, ainsi qu'éventuellement la présence de leurs voisins actifs. De la sorte, les téléphones mobiles Ti disposent d'informations de voisinage d'une bonne fiabilité.

Le téléphone source (ici T1), qui sollicite le relais de ses données par l'intermédiaire des terminaux relais (ici T2 et T3), peut également tenter de transmettre directement ses données, sous la forme de signaux, au satellite SAT qui couvre la zone de couverture ZC dans laquelle il est situé.

Comme indiqué ci-dessus, chaque terminal relais T2, T3, déterminé par le téléphone source T1, est chargé de relayer les signaux qu'il reçoit dudit téléphone source T1. Pour ce faire, on peut prévoir une procédure de configuration du terminal relais T2, T3 en mode relais dès qu'il reçoit des signaux à relayer, et bien entendu s'il n'est pas déjà occupé à une autre tâche, ou bien s'il lui reste suffisamment d'énergie électrique pour effectuer cette opération sans compromettre son propre fonctionnement. Préférentiellement, lorsque les informations contenues dans la table de terminaux relais le permettent, le téléphone source T1 détermine au moins deux identifiants de terminaux relais auxquels il va transmettre des signaux comprenant des données identiques (ou échos).

Une fois configurés en mode relais les terminaux relais T2, T3 retransmettent les signaux reçus vers le satellite SAT. Mais, on peut également envisager que chaque terminal relais détermine, comme le téléphone source T1, au moins un autre terminal relais afin de lui retransmettre les signaux pour qu'il les relaie également. Dans ce cas le terminal relais doit disposer d'une table de terminaux relais, ce qui est le cas lorsqu'il constitue un téléphone mobile.

Dans l'exemple illustré sur la figure 1, le terminal relais T3 a déterminé dans sa table que les terminaux relais T4 et T5 étaient voisins et actifs, si bien qu'il leur a retransmis les signaux qu'il a reçus afin qu'ils les relaient vers le satellite SAT. L'utilisation des terminaux T4 et T5 est par exemple signalée au terminal source T1 afin qu'il puisse gérer (limiter le cas échéant) le nombre de terminaux relais mis en oeuvre pour la transmission relais.

Le but de la retransmission multiple de signaux comprenant des données identiques est en effet de permettre une amélioration de la qualité de la communication, du fait de l'énergie (ou niveau) accru(e) que ces signaux, comprenant des données identiques, présentent une fois qu'ils ont été combinés. On peut en effet montrer que le gain sur une communication, induit par la retransmission de n terminaux relais, est de l'ordre de 10*log(n) dB, n étant le nombre de terminaux relais desquels on a effectivement reçu des signaux comprenant des données identiques.

La combinaison des signaux émis par les terminaux peut se faire soit au niveau du satellite SAT, soit au niveau de la gateway GW.

Dans le premier cas, dès que le satellite SAT a reçu d'un terminal relais ou d'un téléphone source des signaux représentant des données, il aligne temporellement les éventuels signaux comprenant des données identiques (appelés échos) retransmis par un ou plusieurs autres terminaux relais. Puis, le satellite SAT effectue la combinaison (en amplitude et phase) des signaux comprenant les données identiques (ou échos) avant de retransmettre vers la gateway GW (après une éventuelle transposition de fréquence dans le cas d'une interface W-CDMA) un signal combiné présentant une énergie accrue (sommée). La gateway GW reçoit alors ce signal combiné, ce qui facilite le traitement et améliore notablement la qualité de la communication.

Dans le second cas, le satellite SAT ne fait que relayer (après une éventuelle transposition de fréquence) les signaux qu'il reçoit des terminaux relais (ici T2 à T5) et éventuellement du téléphone source T1. Dès que la gateway GW reçoit des signaux représentant des données, elle attend pendant une fenêtre temporelle choisie afin de collecter des éventuels signaux comprenant des données identiques (appelés échos) retransmis par un ou plusieurs terminaux relais et éventuellement le téléphone source T1, via le satellite SAT. Puis, elle effectue la combinaison en amplitude et phase des signaux comprenant des données identiques (ou échos). Ce traitement est ainsi notablement facilité et la qualité de la communication montante notablement améliorée du fait de l'énergie accrue.

L'invention permet également d'améliorer la qualité des communications descendantes. En effet, elle propose également un procédéconsistant, lorsque la gateway GW souhaite transmettre (ici via le satellite SAT) des données à un téléphone mobile destinataire Tj (ici j = 1 à 5), que ce dernier détermine l'identifiant d'au moins un terminal relais Tk (ici k = 1 à 5) ou TR voisin du téléphone destinataire Tj afin de lui transmettre par voie d'ondes des signaux comprenant des données identiques (ou échos) représentant les données à transmettre, de sorte qu'il les relaie vers le téléphone destinataire Tj.

Pour ce faire, chaque terminal Tk dispose également d'une table de terminaux destinataires Tj pour lesquels il peut servir de relais. Cette table est mise à jour régulièrement, par exemple périodiquement, au moyen de messages de signalisation transmis par les téléphones mobiles Ti et les éventuels terminaux relais fixes TR.

Préférentiellement, lorsque les informations contenues dans la table de terminaux relais le permettent, chaque terminal destinataire détermine au moins deux identifiants de terminaux relais Tk ou TR qui vont lui transmettre des signaux comprenant des données identiques (ou échos).

Le terminal destinataire Tj, qui sollicite le relais des signaux comprenant des données identiques (ou échos) par les terminaux relais Tk ou TR, peut également recevoir directement les signaux (ou échos) provenant (ici) du satellite SAT.

Par ailleurs, on peut envisager que le satellite SAT dispose également d'une table de terminaux relais, qu'il met à jour régulièrement, par exemple périodiquement, au moyen de messages de signalisation transmis par les téléphones mobiles Ti et les éventuels terminaux relais fixes TR. Préférentiellement, lorsque les informations contenues dans la table de terminaux relais le permettent, le satellite SAT détermine au moins deux identifiants de terminaux relais Tk ou TR auxquels il va transmettre des signaux comprenant des données identiques (ou échos).

Le satellite SAT, qui sollicite le relais des signaux comprenant des données identiques (ou échos) par les terminaux relais Tk ou TR, peut également tenter de transmettre directement les signaux (ou échos) au téléphone destinataire, en particulier lorsque la liaison (descendante) avec ce terminal destinataire Tj est de qualité bonne ou moyenne.

Bien entendu, chaque relais au niveau d'un terminal relais peut nécessiter le placement préalable de ce dernier dans un mode relais lorsqu'il reçoit les signaux à relayer (s'il n'est pas déjà occupé à une autre tâche).

Lorsque le téléphone destinataire Tj a reçu d'un terminal relais Tk ou TR ou du satellite SAT des signaux représentant des données, il attend pendant une fenêtre temporelle choisie afin de collecter des éventuels signaux comprenant des données identiques (appelés échos) retransmis par un ou plusieurs autres terminaux relais. Puis, il effectue la combinaison (en phase et amplitude) des signaux comprenant des données identiques (ou échos), avant de les traiter localement. Ce traitement est ainsi notablement facilité et la qualité de la communication descendante notablement améliorée du fait de l'énergie accrue (sommée). Le terminal peut également se limiter à ne choisir que le signal de meilleure qualité.

On peut également envisager que chaque terminal relais Tk ou TR attende pendant une fenêtre temporelle choisie afin de collecter des éventuels signaux comprenant des données identiques (appelés échos) retransmis par les autres terminaux relais. Puis, il effectue la combinaison (en amplitude et phase) des signaux comprenant des données identiques (ou échos), avant de retransmettre vers le terminal destinataire Tj, éventuellement via au moins un autre terminal relais voisin, le signal combiné présentant l'énergie accrue (sommée).

Afin de mettre en oeuvre les procédés selon l'invention, on peut par exemple utiliser des téléphones mobiles du type de celui illustré sur la figure 2.

Plus précisément, le téléphone mobile T illustré comprend tout d'abord un module d'émission/réception MER couplé à une antenne d'émission/ réception A et chargé, d'une part, de générer les signaux représentant les données à transmettre qui lui sont fournies par un module de transmission de données MTD (comprenant par exemple le microphone), et d'autre part, de réceptionner les signaux provenant de la gateway GW via le satellite SAT et les terminaux relais Tk ou TR.

Il comprend également un module de gestion MG1 chargé, par exemple, d'observer la sortie de la partie de génération de données du module de transmission de données MTD. Ainsi chaque fois que des données doivent être transmises, le module de gestion MG1 détermine dans une mémoire MTR, contenant la table de terminaux relais, les identifiants des terminaux relais Tk ou TR auxquels doivent être transmis les signaux comprenant des données identiques (ou échos) représentant lesdites données. Ce module de gestion MG1 est également chargé d'ordonner au module d'émission/réception MER de générer les signaux et leurs échos et de les transmettre au satellite SAT ainsi qu'à chaque terminal relais Tk ou TR déterminé. Pour ce faire, il lui fournit l'identifiant de chaque terminal relais Tk ou TR qu'il a déterminé dans la mémoire MTR.

Par ailleurs, le téléphone mobile T peut également comporter un module de traitement MT1, alimenté par le module d'émission/réception MER en signaux reçus du satellite SAT et des terminaux relais, et chargé de combiner ces signaux (en phase et amplitude) afin qu'ils puissent être traités en interne.

Comme indiqué précédemment, le téléphone mobile T est préférentiellement agencé de manière à assurer, en complément, le relais des signaux qu'il reçoit vers le satellite SAT et/ou vers un ou plusieurs autres terminaux relais TR. Dans ce cas, son module de gestion MG1 comprend préférentiellement un sous-module de configuration MC1 chargé d'assurer la configuration du module d'émission/réception MER en mode relais lorsque ce dernier reçoit de nouveaux signaux à relayer.

Egalement comme indiqué précédemment, le réseau peut comporter des terminaux relais fixes, c'est-à-dire dédiés exclusivement au relais des signaux (ou échos). Un tel terminal relais fixe TR est illustré à titre d'exemple sur la figure 3. Il est sensiblement identique sur le plan fonctionnel à un téléphone mobile Ti du type de celui présenté ci-avant en référence à la figure 2.

En fait, il se différencie de ce dernier par le fait qu'il est conçu ni pour générer des données à transmettre, par exemple en coopération avec un microphone, ni pour traiter des données reçues, par exemple pour les délivrer sur un haut parleur. Il comporte donc essentiellement un module d'émission/ réception MER simplifié et dédié au relais des signaux reçus par son antenne A, un éventuel module de gestion MG2 couplé à une mémoire MTR, lorsqu'il est également chargé de déterminer d'autres terminaux relais, ainsi qu'éventuellement un module de traitement MT2 chargé de combiner (en amplitude et phase) les signaux reçus comprenant des données identiques.

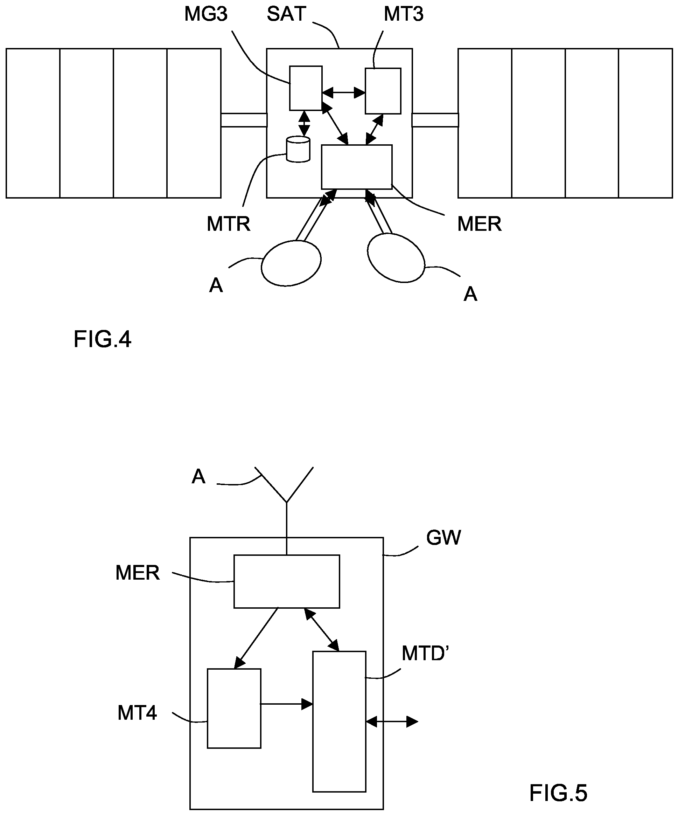

Par ailleurs, pour les signaux transmis sur la voie montante, lorsque le satellite SAT est chargé de procéder à la combinaison (en amplitude et phase) des signaux comprenant des données identiques, ledit satellite SAT peut être agencé comme illustré sur la figure 4.

Plus précisément, dans l'exemple de réalisation illustré sur la figure 4, le satellite SAT comprend en complément de ses modules fonctionnels habituels, comme notamment son module d'émission/réception MER couplé à son (ou ses) antenne(s) A, un module de traitement MT3 chargé de combiner (en amplitude et phase) les signaux comprenant des données identiques, reçus des téléphones mobiles Ti et des éventuels relais fixes TR, comme décrit précédemment, puis d'ordonner au module d'émission/réception MER de les transmettre à la gateway GW avec l'énergie accrue (sommée). Dans ce cas, la gateway GW est de type standard.

Pour les signaux transmis sur la voie descendante, le satellite SAT peut comprendre un module de gestion MG3, couplé au moins au module d'émission/réception MER et chargé d'observer les signaux (descendants) reçus par ce dernier. Ainsi chaque fois que des signaux descendants doivent être transmis à un téléphone destinataire Tj (situé ici dans la zone de couverture ZC de son satellite SAT), le module de gestion MG3 détermine dans une mémoire MTR, contenant la table des terminaux relais de la zone de couverture ZC, les identifiants des terminaux relais Tk ou TR auxquels doivent être transmis les signaux comprenant des données identiques (ou échos). Ce module de gestion MG3 est également chargé d'ordonner au module d'émission/réception MER de générer les signaux et leurs échos afin de les transmettre au téléphone destinataire Tj ainsi qu'à chaque terminal relais Tk ou TR déterminé. Pour ce faire, il lui fournit l'identifiant de chaque terminal relais qu'il a déterminé dans la mémoire MTR.

Lorsque la combinaison des signaux, comprenant des données identiques émis par les terminaux, est effectuée au niveau de la gateway GW, le satellite SAT est de type standard et ne fait que lui retransmettre tous les signaux qu'il reçoit des téléphones mobiles Ti et des éventuels terminaux relais fixes TR. A cet effet, la gateway GW peut être agencée comme illustré sur la figure 5.

Plus précisément, dans l'exemple de réalisation illustré sur la figure 5, la gateway GW comprend en complément de ses modules fonctionnels habituels, comme notamment son module d'émission/réception MER couplé à son antenne A, un module de traitement MT4 chargé de combiner (en amplitude et phase) les signaux comprenant des données identiques, reçus des téléphones mobiles Ti et des éventuels relais fixes TR, via le satellite SAT, comme décrit précédemment. Puis, le module de traitement MT4 communique les signaux combinés au module de traitement de données MTD' auquel il est couplé afin qu'il traite les données qu'ils représentent.

Les différents modules de traitement MT1 à MT4, les différents modules de gestion MG1 à MG3 et les différents modules de configuration MC1 à MC3, peuvent être réalisés sous la forme de circuits électroniques, de modules logiciels (ou informatiques), ou d'une combinaison de circuits et de logiciels.

L'invention ne se limite pas aux modes de réalisation de terminal de communication (éventuellement satellitaire), de terminal relais fixe, de satellite de communication, de station de communication (éventuellement satellitaire), et de procédés de transmission de données décrits ci-avant, seulement à titre d'exemple, mais elle englobe toutes les variantes que pourra envisager l'homme de l'art dans le cadre des revendications ci-après.

Ainsi dans ce qui précède, on a décrit la mise en oeuvre de l'invention dans un réseau de type satellitaire. Mais, l'invention concerne également les réseaux radio cellulaires, comme par exemple ceux de type GSM/GPRS et UMTS. Dans ce cas, d'une première part, les stations de communication ne sont plus des stations satellitaires de type gateway, mais des stations de base, comme par exemple des Node Bs ou des BTSs, d'une deuxième part, les terminaux de communication radio ne sont plus obligatoirement de type satellitaire, et d'une troisième part, les communications entre la station de communication et les terminaux radio ne se font plus par l'intermédiaire d'un satellite de communication (les signaux sont donc relayés par les terminaux relais entre les terminaux radio (source ou destinataire) et la station de base).

Par ailleurs, dans ce qui précède on a décrit une mise en oeuvre de l'invention dans des réseaux où le relais des signaux pouvait se faire lors des transmissions montantes et lors des transmissions descendantes. Mais, l'invention s'applique également aux réseaux dans lesquels le relais des signaux se fait seulement lors des transmissions montantes, ou bien seulement lors des transmissions descendantes.

## Revendications

1. Procédé de transmission de données pour un réseau de communication radio comportant au moins une station de communication (GW) propre à échanger des données par voie d'ondes avec des terminaux de communication radio (Ti), **caractérisé en ce qu'**il consiste, lorsqu'un terminal de communication radio, dit source (T1), veut transmettre des données à ladite station de communication (GW), à déterminer au niveau dudit terminal source (T1) l'identifiant d'au moins deux terminaux de communication voisins actifs, dits relais (T2,T3,TR), de manière à transmettre à chacun des terminaux relais déterminés, par voie d'ondes, des signaux représentant lesdites données à transmettre de sorte que chacun des terminaux relais déterminés relaie lesdits signaux vers ladite station de communication (GW), ladite station de communication (GW) combinant les signaux reçus représentant lesdites données, avant de les traiter localement.

2. Procédé selon la revendication 1, **caractérisé en ce que** ledit terminal source (S1) transmet également lesdits signaux représentant lesdites données vers ladite station de communication (GW).

3. Procédé selon l'une des revendications 1 à 2, **caractérisé en ce que** l'on détermine au niveau de l'un au moins desdits terminaux relais (T2,T3) l'identifiant d'au moins un terminal relais voisin actif (T4,T5) de manière à transmettre par voie d'ondes à chaque terminal relais ainsi déterminé lesdits signaux représentant lesdites données, de sorte qu'il les relaie également vers ladite station de communication (GW).

4. Procédé selon l'une des revendications 1 à 3, **caractérisé en ce qu'**en présence d'un réseau de communication satellitaire, comprenant au moins un satellite de communication (SAT) agencé pour relayer des signaux entre les terminaux radio (Ti) et ladite station de communication (GW), on combine dans ledit satellite (SAT) des signaux reçus représentant lesdites données de manière à relayer vers ladite station de communication (GW) des signaux combinés représentant lesdites données et présentant une énergie accrue.

5. Procédé selon l'une des revendications 1 à 4, **caractérisé en ce qu'**à réception desdits signaux à relayer ledit terminal relais (Ti,Tk,TR) se configure en relais avant de procéder audit relais des signaux.

6. Procédé selon l'une des revendications 1 à 5, **caractérisé en ce que** lesdits terminaux source (T1) et/ou lesdits terminaux relais (Ti,Tk,TR) sont des terminaux de communication mobiles.

7. Procédé selon l'une des revendications 1 à 6, **caractérisé en ce que** l'un au moins desdits terminaux relais est un terminal fixe (TR) dédié au relais de signaux représentant des données à transmettre.

8. Procédé de transmission de données pour un réseau de communication radio comportant au moins une station de communication (GW) propre à échanger des données par voie d'ondes avec des terminaux de communication radio (Ti), **caractérisé en ce qu'**en cas de données à transmettre à un terminal de communication radio, dit destinataire (Tj), on détermine au niveau dudit terminal destinataire (Tj) l'identifiant d'au moins deux terminaux relais voisins (T2,T3,TR), de manière à transmettre par voie d'ondes à chacun des terminaux relais déterminés lesdits signaux représentant lesdites données pour que chacun des terminaux relais déterminés les relaie vers ledit terminal destinataire (Tj), ledit terminal destinataire (Tj) combinant les signaux reçus représentant lesdites données avant de les traiter localement,

9. Procédé selon la revendication 8, **caractérisé en ce qu'**en présence d'un réseau de communication satellitaire, comprenant au moins un satellite de communication (SAT) agencé pour relayer des signaux entre les terminaux radio (Ti) et ladite station de communication (GW), et **en ce qu'**en cas de données à transmettre à un terminal de communication radio, dit destinataire (Tj), on détermine au niveau dudit satellite (SAT) l'identifiant d'au moins deux terminaux relais voisins (Ti,TR) dudit terminal destinataire (Tj) de manière à transmettre, par voie d'ondes, à chacun des terminaux relais déterminés des signaux représentant lesdites données à transmettre, de sorte qu'il relaie lesdits signaux vers ledit terminal destinataire (Tj).

10. Procédé selon l'une des revendications 8 à 9, **caractérisé en ce que** l'on transmet également lesdits signaux représentant lesdites données audit terminal destinataire (Tj).

11. Procédé selon l'une des revendications 8 à 10, **caractérisé en ce que** l'on détermine au niveau de l'un au moins desdits terminaux relais (Ti,TR) l'identifiant d'au moins un terminal relais voisin actif (Tk,TR) de manière à transmettre par voie d'ondes à chaque terminal relais ainsi déterminé lesdits signaux représentant lesdites données, de sorte qu'il les relaie également vers ledit terminal destinataire (Tj).

12. Procédé selon l'une des revendications 8 à 11, **caractérisé en ce que** l'on combine dans au moins un terminal relais (Ti,TR) les signaux reçus représentant lesdites données de manière à relayer vers ledit terminal destinataire (Tj), éventuellement via au moins un autre terminal relais voisin (Tk,TR), un signal combiné représentant lesdites données et présentant une énergie accrue.

13. Procédé selon l'une des revendications 8 à 12, **caractérisé en ce qu'**à réception desdits signaux à relayer ledit terminal relais (Ti,Tk,TR) se configure en relais avant de procéder audit relais des signaux.

14. Procédé selon l'une des revendications 8 à 13, **caractérisé en ce que** ledit terminal destinataire (Tj) et/ou lesdits terminaux relais (Ti,Tk,TR) sont des terminaux de communication mobiles.

15. Procédé selon l'une des revendications 8 à 14, **caractérisé en ce que** l'un au moins desdits terminaux relais est un terminal fixe (TR) dédié au relais de signaux représentant des données à transmettre.

16. Terminal de communication (T1,TR) pour un réseau de communication radio comportant au moins une station de communication (GW) propre à échanger des données par voie d'ondes avec des terminaux de communication radio (Ti), **caractérisé en ce qu'**il comprend des moyens de gestion (MG1; MG2) agencés en cas de données à transmettre à ladite station de communication (GW), pour déterminer l'identifiant d'au moins deux terminaux de communication radio voisins actifs (T2,T3), dits relais, et pour ordonner la transmission par voie d'ondes à chacun des terminaux relais (T2,T3) déterminés de signaux représentant lesdites données, de sorte qu'ils soient relayés vers ladite station de communication (GW), ledit terminal de communication (T1, TR) comprenant également des moyens de traitement (MT1; MT2) agencés pour combiner des signaux reçus représentant des données identiques provenant de ladite station de communication (GW) et d'autres terminaux de communications, avant que lesdites données soient traitées localement..

17. Terminal selon la revendication 16, **caractérisé en ce que** lesdits moyens de gestion (MG1; MG2) sont agencés pour ordonner la transmission par voie d'ondes desdits signaux représentant lesdites données vers la station de communication (GW).

18. Terminal selon l'une des revendications 16 à 17, **caractérisé en ce qu'**il comprend des moyens de configuration (MC1) agencés, à réception de signaux à relayer pour configurer dans un mode de fonctionnement dit relais des moyens de transmission locaux (MER) de sorte qu'ils relaient lesdits signaux reçus vers ladite station de communication (GW) et/ou vers au moins un terminal relais voisin ou vers un terminal destinataire (Tj).

19. Terminal selon la revendication 18, **caractérisé en ce que** lesdits moyens de traitement (MT1; MT2) sont agencés, lorsque lesdits moyens de transmission (MER) sont configurés en mode relais, pour combiner les signaux reçus représentant des données identiques à relayer avant d'autoriser le relais du signal combiné avec une énergie accrue.

20. Terminal selon l'une des revendications 16 à 19, **caractérisé en ce qu'**il est agencé pour échanger des signaux par voie d'ondes avec un satellite de communication du réseau, chargé d'assurer le relais de signaux entre lesdits terminaux radio (Ti) et ladite station de communication (GW).

## Patentansprüche

1. Verfahren zur Datenübertragung für ein Radio- bzw. Funkkommunikationsnetz, das mindestens eine Kommunikationsstation (GW) umfasst, die in der Lage ist, Daten mittels Wellen mit Funkkommunikationsendgeräten bzw. -terminals (Ti) auszutauschen, **dadurch gekennzeichnet, dass** es, wenn ein Funkkommunikationsendgerät, eine so genannte Quelle (T1), Daten an die Kommunikationsstation (GW) übertragen möchte, die Bestimmung des Identifikationszeichens bzw. die Bezeichnung von mindestens zwei benachbarten Kommunikationsendgeräten, die so genannten Relais (T2, T3, TR), an dem Quellendgerät (T1) umfasst, um an jedes der bestimmten Relaisendgeräte Signale in Form von Wellen zu senden, die die zu übertragenden Daten repräsentieren, so dass jedes der bestimmten Relaisendgeräte die Signale an die Kommunikationsstation (GW), die so genannte Kommunikationsstation (GW), weiterleitet, die ihre empfangenen Signale, die die Daten repräsentieren, kombiniert, bevor sie lokal verarbeitet werden.

2. Verfahren nach Anspruch 1, **dadurch gekennzeichnet, dass** das Quellenendgerät (S1) auch die Signale, die Daten darstellen, an die Kommunikationsstation (GW) überträgt.

3. Verfahren nach einem der Ansprüche 1 bis 2, **dadurch gekennzeichnet, dass** an mindestens einem der Relaisendgeräte (T2, T3) das Identifikationszeichen mindestens eines aktiven benachbarten Relaisendgerät (T4, T5) bestimmt wird, so dass es mittels Wellen an jedes Relaisendgerät übertragen wird, um ferner die Signale, die die Daten darstellen, zu bestimmen, so dass diese auch an die Kommunikationsstation (GW) weiterleitet werden.

4. Verfahren nach einem der Ansprüche 1 bis 3, **dadurch gekennzeichnet, dass** in Gegenwart eines Satellitenkommunikationsnetzwerks, das mindestens einen Kommunikationssatelliten (SAT) umfasst, der zum Übermitteln bzw. Weiterleiten von Signalen zwischen den Funkendgeräten (Ti) und der Kommunikationsstation (GW) angeordnet ist, wobei in dem Satelliten (SAT) empfangene Signale, die die Daten darstellen, kombiniert werden, so dass die kombinierten Signale, die die Daten darstellen und eine erhöhte Energie aufweisen, an die Kommunikationsstation (GW) weitergeleitet werden.

5. Verfahren nach einem der Ansprüche 1 bis 4, **dadurch gekennzeichnet, dass** nach dem Empfang der Signale, die weitergeleitet werden sollen, das Relaisendgerät (Ti.Tk.TR) als Relais eingerichtet wird, bevor mit dem Weiterleiten der Signale fortgefahren wird.

6. Verfahren nach einem der Ansprüche 1 bis 5, **dadurch gekennzeichnet, dass** die Quellenendgeräte (T1) und/oder die Relaisendgeräte (Ti, Tk, TR) mobile Kommunikationsendgeräte sind.

7. Verfahren nach einem der Ansprüche 1 bis 6, **dadurch gekennzeichnet, dass** mindestens eines der Relaisendgeräte ein festes Endgerät bzw. Terminal (TR) ist, das für die Weiterleitung von Signalen bestimmt ist, die die Daten, die übertragen werden sollen, repräsentieren.

8. Verfahren zur Datenübertragung für ein Funkkommunikationsnetz, das mindestens eine Kommunikationsstation (GW) umfasst, die in der Lage ist, Daten mittels Wellen mit Funkkommunikationsendgeräten (Ti) auszutauschen, **dadurch gekennzeichnet, dass** im Falle von Daten, die an ein Funkkommunikationsendgerät, den so genannten Empfänger (Tj), übertragen werden sollen, das Identifikationszeichen von mindestens zwei benachbarten Relaisendgeräten (T2) T3, TR) an dem Endgerät (Tj) bestimmt wird, um mittels Wellen an jedes der bestimmten Relaisendgeräte die Signale, die die Daten repräsentieren, die übertragen werden sollen, so dass jedes der bestimmten Relaisendgeräte sie an das Zielendgerät (Tj) weiterleitet, wobei das Endterminal oder das Abschlussendgerät (Tj) die empfangenen Signale, die die Daten repräsentieren, kombiniert, bevor diese lokal verarbeitet werden.

9. Verfahren nach Anspruch 8, **dadurch gekennzeichnet, dass** es in Gegenwart eines Satellitenkommunikationsnetzwerks, das mindestens einen Kommunikationssatelliten (SAT) umfasst, der zum Übermitteln bzw. Weiterleiten der Signale zwischen den Funkendgeräten (Ti) und der Kommunikationsstation (GW) und für den Fall, dass Daten, die an ein Funkkommunikationsendgerät übertragen werden sollen, angeordnet ist, sogenannter Empfänger (Tj), wird das Identifikationszeichen von mindestens zwei benachbarten Relaisendgeräten (T2, T3, TR) an dem Abschlussendgerät (Tj) bestimmt, um mittels Wellen an jedes der bestimmten Relaisendgeräte die Signale zu übertragen, die die zu übertragenden Daten repräsentieren, die die Signale an das Abschlussendgerät (Tj) weiterleiten.

10. Verfahren nach einem der Ansprüche 8 bis 9, **dadurch gekennzeichnet, dass** auch die Signale, die die Daten darstellen, an das Endgerät (Tj) übertragen werden.

11. Verfahren nach einem der Ansprüche 8 bis 10, **dadurch gekennzeichnet, dass** mindestens eines der Relaisendgeräte (Ti, TR) das Identifikationszeichen mindestens eines aktiven benachbarten Relaisendgerätes (Tk, TR) bestimmt, um durch Wellen an jedes so bestimmte Relaisendgerät die Signale, die die Daten darstellen, zu übertragen, so dass diese auch an das Abschlussendgerät (Tj) weitergeleitet werden.

12. Verfahren nach einem der Ansprüche 8 bis 11, **dadurch gekennzeichnet, dass** die empfangenen Daten, die die Daten repräsentieren, in mindestens einem Relaisendgerät (Ti.TR) kombiniert werden, um an das Abschlussendgerät (Tj), möglicherweise über mindestens ein weiteres benachbartes Relaisendgerät (Tk, TR), ein kombiniertes Signal, das die Daten repräsentiert und das eine erhöhte Energie aufweist, zu übermitteln.

13. Verfahren nach einem der Ansprüche 8 bis 12, **dadurch gekennzeichnet, dass** beim Empfang der Signale, die übermittelt werden sollen, das Relaisendgerät (Ti.Tk.TR) zur Weiterleitung eingerichtet wird, bevor mit dem Weiterleiten von Signalen begonnen wird.

14. Verfahren nach einem der Ansprüche 8 bis 13, **dadurch gekennzeichnet, dass** das Abschlussendgerät (Tj) und/oder die Relaisendgeräte (Ti, Tk, TR) mobile Kommunikationsendgeräte sind.

15. Verfahren nach einem der Ansprüche 8 bis 14, **dadurch gekennzeichnet, dass** mindestens eines der Relaisendgeräte ein festes Endgerät (TR) ist, das für die Weiterleitung von Signalen bestimmt ist, die Daten, die übertragen werden sollen, repräsentieren.

16. Kommunikationsendgerät (T1, TR) für ein Funkkommunikationsnetz, das mindestens eine Kommunikationsstation (GW) aufweist, die in der Lage ist, Daten über Wellen mit Funkkommunikationsendgeräten (TO) auszutauschen, **dadurch gekennzeichnet, dass** es Verwaltungsmittel (MG1; 1V1G2) umfasst, die für den Fall, das Daten an die Kommunikationsstation (GW) übertragen werden sollen, angeordnet sind, um das Identifikationszeichen von mindestens zwei aktiven benachbarten Funkkommunikationsendgeräten (T2, T3), sogenannten Relais, zu bestimmen und um die Übertragung von Signalen, die die Daten repräsentieren, durch Wellen an jedes der bestimmten Relaisendgeräte (T2, T3) anzuordnen. so dass diese an die Kommunikationsstation (GW) weitergeleitet werden, wobei das Kommunikationsendgerät (T1, TR) auch Verarbeitungsmittel (MT1; MT2) umfasst, die angeordnet sind, um empfangene Signale, die identische Daten von der Kommunikationsstation (GW) und anderen Kommunikationsendgeräten repräsentieren, zu kombinieren, bevor die Daten lokal verarbeitet werden.

17. Endgerät nach Anspruch 16, **dadurch gekennzeichnet, dass** die Verwaltungsmittel (MG1; MG2) angeordnet sind, um die Wellenübertragung der Signale, die die Daten repräsentieren, an die Kommunikationsstation (GW) anzuordnen bzw. zu ordnen.

18. Endgerät nach einem der Ansprüche 16 bis 17, **dadurch gekennzeichnet, dass** es Konfigurationsmittel (MC1) umfasst, die beim Empfang von Signalen, die zum Konfigurieren in einen Betriebsmodus weitergeleitet werden sollen, sogenannte lokale Übertragungsmittel (MER), angeordnet sind, so dass sie die empfangenen Signale an die Kommunikationsstation (GW) und/oder an mindestens ein benachbartes Relaisendgerät oder an das Abschlussendgerät Tj) weiterleiten.

19. Endgerät nach Anspruch 18, **dadurch gekennzeichnet, dass** die Verarbeitungsmittel (MT1; MT2), wenn die Übertragungsmittel (MER) in einen Weiterleitungsmodus eingerichtet sind, zur Kombination der empfangenen Signale angeordnet sind, die identische Daten repräsentieren, die weitergeleitet werden sollen, bevor die Weiterleitung der kombinierten Signale mit erhöhter Energie erlaubt wird.

20. Endgerät nach einem der Ansprüche 16 bis 19, **dadurch gekennzeichnet, dass** es zum Austausch von Signalen durch Wellen mit einem Netzwerkkommunikationssatelliten angeordnet ist, der für die Weiterleitung von Signalen zwischen den Funkendgeräten (Ti) und der Kommunikationsstation (GW) zuständig ist.

## Claims

1. A data transmission method for a radio communication network comprising at least one communication station (GW) capable of exchanging data by means of waves with radio communication terminals (Ti), **characterised in that** it comprises, when a radio communication terminal, so-called source (T1), wants to transmit data to said communication station (GW), determining at said source terminal (T1) the identifier of at least two neighbouring communication terminals, so-called relays (T2, T3, TR), so as to transmit to each of the relay terminals determined, by way of waves, signals representing said data to be transmitted so that each of the determined relay terminals relays said signals to said communication station (GW), so-called communication station (GW) which combines its received signals representing said data, before processing them locally.

2. The method according to claim 1, **characterised in that** said source terminal (S1) also transmits said signals representing said data to said communication station (GW).

3. The method according to one of claims 1 to 2, **characterised in that** at at least one of said relay terminals (T2, T3) the identifier of at least one active neighbouring relay terminal (T4, T5) is determined so as to transmit by waves to each relay terminal thus determined said signals representing said data, so that it also relays them to said communication station (GW).

4. The method according to one of claims 1 to 3, **characterised in that** in the presence of a satellite communication network, comprising at least one communication satellite (SAT) arranged to relay signals between the radio terminals (Ti) and said communication station (GW), combining in said satellite (SAT) received signals representing said data so as to relay to said communication station (GW) combined signals representing said data and having increased energy.

5. The method according to one of claims 1 to 4, **characterised in that** upon receipt of said signals to be relayed, said relay terminal (Ti.Tk.TR) is configured in relay before proceeding to said relaying of signals.

6. The method according to one of claims 1 to 5, **characterised in that** said source terminals (T1) and/or said relay terminals (Ti, Tk, TR) are mobile communication terminals.

7. The method according to one of claims 1 to 6, **characterised in that** at least one of said relay terminals is a fixed terminal (TR) dedicated to the relaying of signals representing data to be transmitted.

8. A data transmission method for a radio communication network comprising at least one communication station (GW) capable of exchanging data by means of waves with radio communication terminals (Ti), **characterised in that** in case of data to be transmitted to a radio communication terminal, so-called recipient (Tj), the identifier of at least two neighbouring relay terminals (T2, T3, TR) is determined at said end terminal (Tj),so as to transmit by waves to each of the determined relay terminals said signals representing said data so that each determined relay terminals relays them to said destination terminal (Tj), said end terminal (Tj) combining the received signals representing said data before processing them locally.

9. The method according to claim 8, **characterised in that** in the presence of a satellite communication network, comprising at least one communication satellite (SAT) arranged to relay signals between the radio terminals (Ti) and said communication station (GW), and **in that** in case of data to be transmitted to a radio communication terminal, so-called recipient (Tj), the identifier of at least two neighbouring relay terminals (T2, T3, TR) is determined at said end terminal (Tj), so as to transmit, by waves, to each of the determined relay terminals, signals representing said data to be transmitted, which relays said signals to said end terminal (Tj).

10. The method according to one of claims 8 to 9, **characterised in that** one also transmits said signals representing said data to said end terminal (Tj).

11. The method according to one of claims 8 to 10, **characterised in that** one determines at least one of said relay terminals (Ti, TR) the identifier of at least one active neighbouring relay terminal (Tk, TR) so as to transmit by waves to each relay terminal thus determined, said signals representing said data, so that it also relays them to said end terminal (Tj).

12. The method according to one of claims 8 to 11, **characterised in that** the received signals representing said data are combined in at least one relay terminal (Ti.TR) so as to relay to said end terminal (Tj), possibly via at least one other neighbouring relay terminal (Tk, TR), a combined signal representing said data and having increased energy.

13. The method according to one of claims 8 to 12, **characterised in that** upon receipt of said signals to be relayed, said relay terminal (Ti.Tk.TR) is configured in relay before proceeding to said relaying of signals.

14. The method according to one of claims 8 to 13, **characterised in that** said end terminal (Tj) and/or said relay terminals (Ti, Tk, TR) are mobile communication terminals.

15. The method according to one of claims 8 to 14, **characterised in that** at least one of said relay terminals is a fixed terminal (TR) dedicated to the relaying of signals representing data to be transmitted.

16. The communication terminal (T1, TR) for a radio communication network comprising at least one communication station (GW) capable of exchanging data via waves with radio communication terminals (TO), **characterised in that** it comprises management means (MG1; 1V1G2) arranged in the case of data to be transmitted to said communication station (GW), for determining the identifier of at least two active neighbouring radio communication terminals (T2, T3), so-called relays, and for ordering the transmission by waves to each of the determined relay terminals (T2,T3) of signals representing said data. so that they are relayed to said communication station (GW), said communication terminal (T1, TR) also comprising processing means (MT1; MT2) arranged to combine received signals representing identical data from said communication station (GW) and other communication terminals, before said data is processed locally.

17. The terminal according to claim 16, **characterised in that** said management means (MG1; MG2) are arranged to order the wave transmission of said signals representing said data to the communication station (GW).

18. The terminal according to one of claims 16 to 17, **characterised in that** it comprises configuration means (MC1) arranged, upon reception of signals to be relayed to configure in an operating mode, so-called local transmission means (MER) so that they relay said received signals to said communication station (GW) and/or to at least one neighbouring relay terminal or to an end terminal (Tj).

19. The terminal according to claim 18, **characterised in that** said processing means (MT1; MT2) are arranged, when said transmission means (MER) are configured in relay mode, for combining the received signals representing identical data to be relayed before allowing the relay of the combined signal with increased energy.

20. The terminal according to one of claims 16 to 19, **characterised in that** it is arranged to exchange signals by waves with a network communication satellite, responsible for relaying signals between said radio terminals (Ti) and said communication station (GW).
